Europäisches Patentamt

European Patent Office

Office européen des brevets

(11) Veröffentlichungsnummer: **0 262 576**
**A2**

## (12) EUROPÄISCHE PATENTANMELDUNG

(21) Anmeldenummer: 87113922.6

(22) Anmeldetag: 23.09.87

(51) Int. Cl.⁴: **H04B 1/034**

(30) Priorität: 26.09.86 DE 3632838

(43) Veröffentlichungstag der Anmeldung:
06.04.88 Patentblatt 88/14

(84) Benannte Vertragsstaaten:
**AT BE CH DE FR GB IT LI LU NL SE**

(71) Anmelder: **Siemens Aktiengesellschaft Berlin
und München
Wittelsbacherplatz 2
D-8000 München 2(DE)**

(72) Erfinder: **Nothnagel, Gerd
Geroltstrasse 36
D-8000 München 2(DE)**
Erfinder: **Kiesewetter, Reinhold
Brachvogelweg 5 b
D-8056 Neufahrn(DE)**

(54) **Funksendeempfänger der elektrischen Nachrichtentechnik.**

(57) An das Gehäuse (1) eines tragbaren Funktelefons sind für verschiedene Betriebsarten unterschiedliche Stromversorgungen (15, 16, 17) ansteckbar. Die Hör-Sprech-und Bediengarnitur (3) ist ebenfalls ansteckbar und seitlich mit einer Magnethalterung (4) angehängt. Das Innere des Gehäuses ist in zwei durch eine Scheidewand (30) getrennte Kammern aufgeteilt und die zugehörigen Leiterplatten sind durch die Wand hindurch über Stecker mit Durchführungskondensatoren (52 ... 57) zusammensteckbar.

FIG 1

EP 0 262 576 A2

## Funksendeempfänger der elektrischen Nachrichtentechnik

Die Erfindung bezieht sich auf einen Funksendeempfänger der elektrischen Nachrichtentechnik, der sich in einem Gehäuse mit Traggurt befindet und als transportables Funktelefon mit einer Bedieneinheit ausgebildet ist.

Bei derartigen Funktelefonen wird nicht nur ein kompakter Aufbau sondern auch eine universelle Einsatzmöglichkeit im stationären wie auch im mobilen Betrieb gefordert.

Der Erfindung liegt die Aufgabe zugrunde, ein Gehäuse für ein derartiges Funktelefon anzugeben, das diesen Forderungen nachkommt.

Bei einem Funksendeempfänger der eingangs genannten Art wird diese Aufgabe erfindungsgemäß dadurch gelöst, daß an einer länglichen Seitenwand eines rechteckigen Gehäuseblocks, der den eigentlichen Funksendeempfänger enthält, eine anschraubbare Auflage mit Magnethalterung für die hantelförmige, steckbare Hör-Sprechgarnitur, die auf der Rückseite die Bedientastatur enthält, vorgesehen ist und auf der dem Traggurt gegenüberliegenden Wand einen innenliegenden mehrpoligen Steckanschluß für den wahlweisen Anschluß eines auf das Gehäuse aufschnappbaren Batterieblocks oder einer anderweitigen Stromversorgung enthält, während die Steckanschlüsse für eine Antenne und die Bediengarnitur an der gegenüberliegenden Seitenwand liegen.

Weitere vorteilhafte Ausgestaltungen des Erfindungsgegenstandes finden sich in den Unteransprüchen.

Nachstehend wird die Erfindung anhand von Zeichnungen näher erläutert.

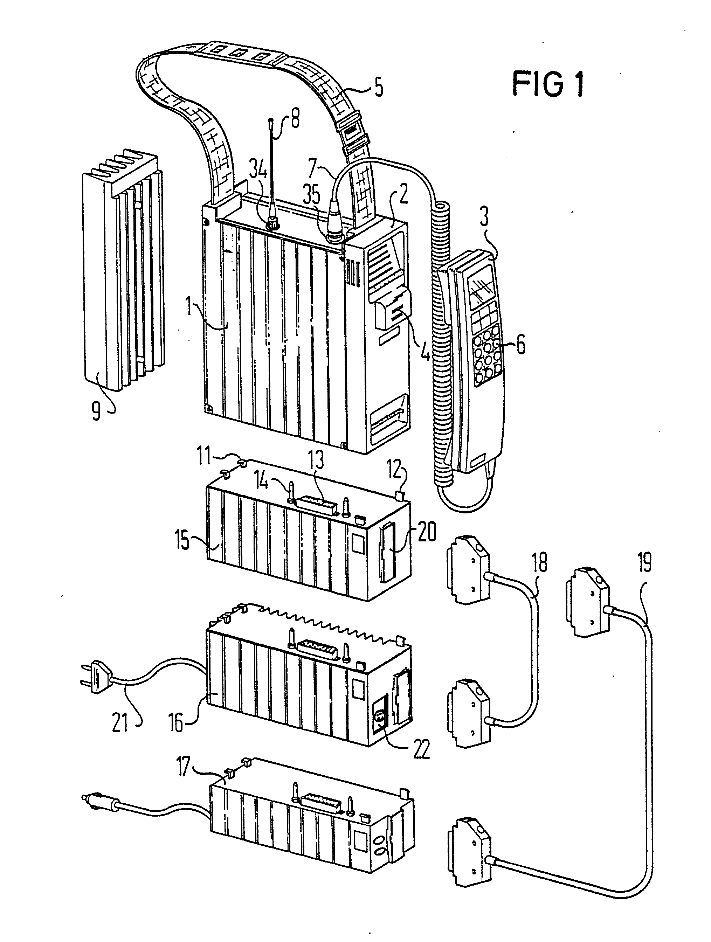

Die Figur 1 zeigt das Funktelefon selbst mit Zusatzgeräten zur Stromversorgung, die wahlweise unten anhängbar sind.

Die Figur 2 zeigt eine Schematik für verschiedene Einbau-und Stromversorgungsmöglichkeiten.

Die Figuren 3 und 4 zeigen das Innere des Gehäuses von zwei verschiedenen Seiten her.

Das Gehäuse 1 des Funktelefons hat seitlich eine Auflage 2 für die Bedien-und Hör-Sprechgarnitur 3. Diese Garnitur hat auf der Innenseite die Hör-und Sprechmuschel und auf der Außenseite die Wähltastatur 6. Über ein Spiralkabel ist sie über einen Steckanschluß 7 mit dem Funktelefon elektrisch verbindbar. Ebenso wie dieser Steckanschluß 7 ist auf der Oberseite des Gehäuses ein Steckanschluß für die Antenne 8 vorgesehen. Ferner ist dort ein Traggurt 5 steckbar befestigt. Rechts neben dem Gehäuse ist ein Zusatzkühlkörper 9 dargestellt, der im Bedarfsfall bei größerer Sendeleistung, insbesondere für Netzbetrieb, an dort an der Seitenwand schon vorgesehene Kühlrippen 10 mit passendem Profil ansteckbar und verschraubbar ist.

An die Unterseite des Gehäuses sind verschiedene Stromversorgungseinrichtungen ansteckbar. Dazu sind Klinken 11 und Rasten 12 vorgesehen. Der elektrische Anschluß erfolgt über eine mehrpolige Steckeinheit 13, die durch Stifte 14 zentriert ist. Es sind wahlweise ein Akkupack 15 ein Netzgerät 16 oder ein Bordadapter 17 für Autoanschluß ansteckbar. Seitlich an diesen Geräten sind mehrpolige Ladebuchsen 20 vorgesehen, über die mittels Zusatzschnüren 18, 19 mit zugehörigen Steckern der Akkupack mit den Zusatznetzgeräten für Lade-oder Pufferbetrieb verbunden werden können. Beim Netzgerät 16 kann wahlweise statt eines Netzkabels 21 auch seitlich eine Netzanschlußbuchse 22 vorgesehen werden.

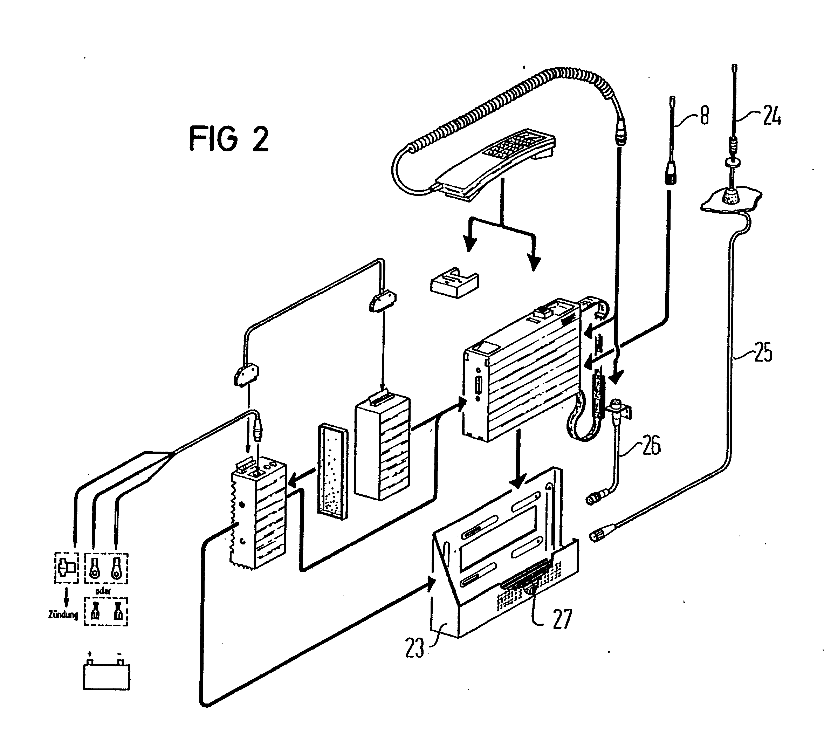

Ein Schema für die wahlweise Unterbringung insbesondere auch in einer Autohalterung 23 ist in der Figur 2 dargestellt. Für diesen halbstationären Betrieb kann dann über eine zusätzliche Verbindungsleitung 26 die entfernt liegende Bediengarnitur angeschlossen werden. Das gleiche gilt für die Autoantenne 24, die über ein Zusatzkabel 25 mit dem Gerät verbunden werden kann.

Die Autohalterung 23 hat auf der Unterseite einen Zusatzkühlblock 27, um bei derartigem Betrieb die Sendeleistung erhöhen zu können. Beim Anstecken des Zusatzstromversorgungsgerätes wird dann automatisch auf den Betrieb mit höherer Sendeleistung umgeschaltet. Auch bei Batteriebetrieb ist ein ganz kurzzeitiges Erhöhen der Sendeleistung durch einen nicht dargestellten Zusatztaster erreichbar.

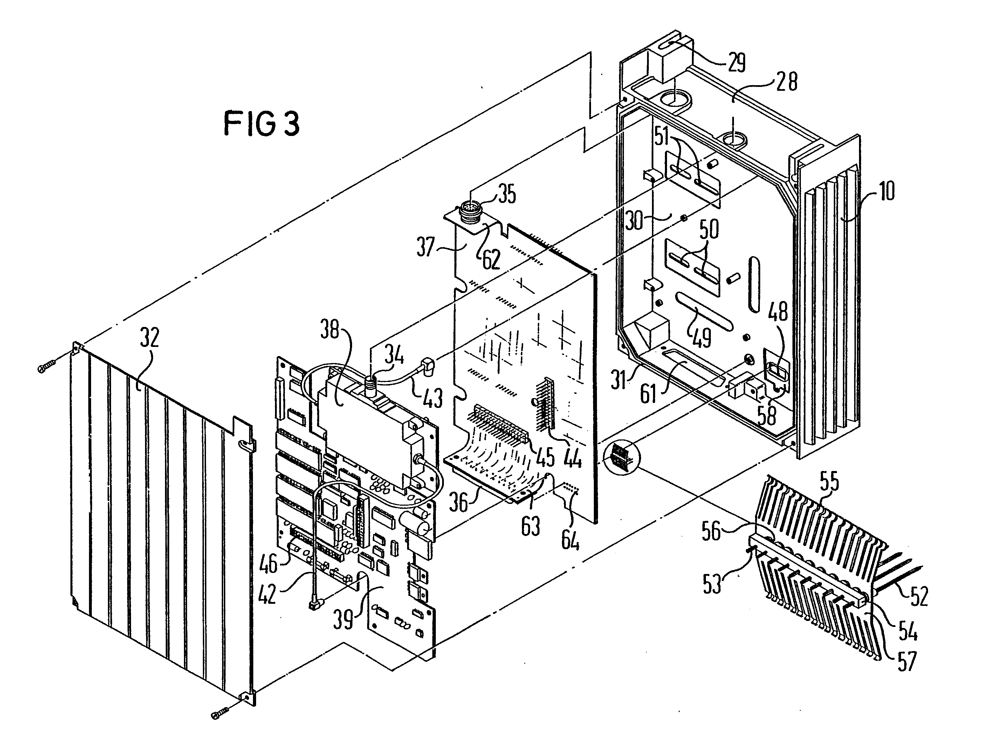

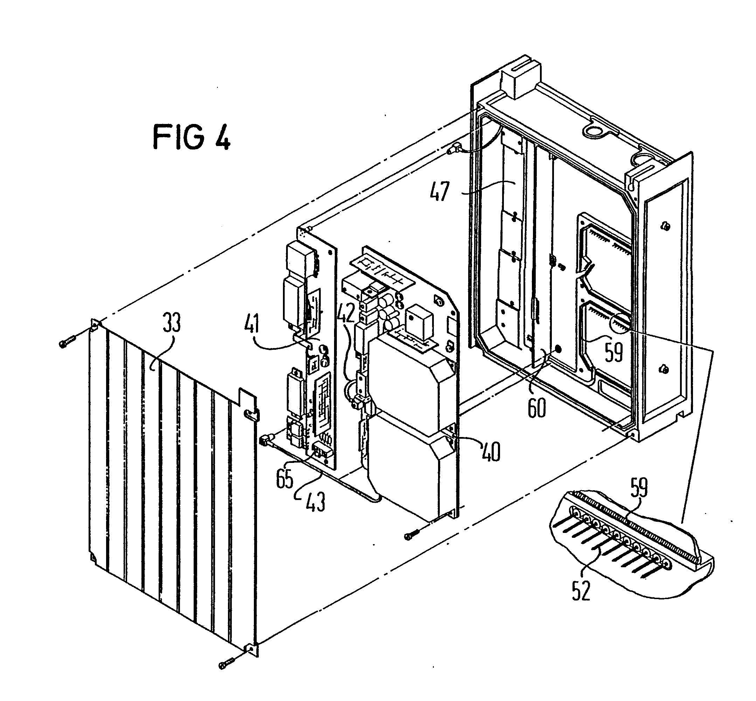

Den Innenaufbau des Funktelefons zeigen die Figuren 3 und 4. Das Grundgehäuse 28 besteht aus einem Spritzgußkörper, der auf seiner größten Fläche etwa mittig eine Scheidewand 30 hat, wodurch zwei Kammern entstehen, die durch Deckel 32, 33 verschließbar sind. Zur besseren Abdichtung gegen Hochfrequenzfelder befindet sich rund um den Deckel im Grundgehäuse eine Hochfrequenzdichtung 31. Im oberen Teil des Grundgehäuses sind Gurthalterungen 29 sichtbar und die Durchbrüche für die Antennenanschlußbuchse 34 und die Anschlußbuchse 35 für die Bediengarnitur. Gehäuseunterseitig ist ein Durchbruch 61 sichtbar zur Aufnahme einer Buchsenleiste 36 für die Stromversorgungen.

Die geöffnete Kammer gemäß Figur 3 enthält nahe der Scheidewand eine Leiterplatte 37 für die gemeinsame Verdrahtung (Interconnection). An dieser Verdrahtungsleiterplatte befinden sich so zum Beispiel über flexible Bandleitungen 62, 63, die Steckeinheiten 35 und 36 für Bediengerät und Stromversorgung. Oberhalb dieser Verdrahtungsleiterplatte ist mit Abstand eine Leiterplatte 39 angeordnet, die im wesentlichen die Bauelemente für die Logik und die Steuerung des gesamten Gerätes enthält. Darüber befindlich ist noch der Antennendiplexer 38 angeordnet, an den der Empfänger über ein Kabel 42 anschließbar ist und der Sender über ein Kabel 43. Die Logikplatte 39 ist elektrisch mit der gemeinsamen Verdrahtungsleiterplatte 37 über Steck-und Lötstiftreihen 44, 45 verbunden. Eine der zugehörigen Buchsenleisten auf der Logikplatte 39 ist mit 46 bezeichnet.

In der in Figur 4 dargestellten zweiten Kammer des Gehäuses befinden sich die Bauelemente für die Radiofrequenz. So liegen zum Beispiel auf einer Leiterplatte 40 die VCO's für Sender und Empfänger und auf einer getrennten Platine 41, die Sendebauteile wie Treiber, Endstufen, Richtkoppler usw. Diese Platte 41 ist gut wärmeleitend mit einem entsprechenden Wandabschnitt 47 der Scheidewand verbunden. Von dort aus wird die Wärme der Sendeendstufe unmittelbar auf die anliegende Seitenwand des Rahmengehäuses übertragen, wo sich auch die Kühlrippen 10 befinden.

Sämtliche Verbindungsleitungen zwischen dem radiofrequenten Teil und der gemeinsamen Verdrahtungsleiterplatte 37 führen über Durchbrüche 48 bis 51 in der Scheidewand 30 und sind in besonderer Weise gegen Hochfrequenzfelder abgedichtet. Hierzu dienen jeweils eine Reihe von Steck-und Lötstiften, wobei die längere Seite 52 der Stifte zum Stecken in eine Buchsenleiste 65 auf der entsprechenden Radiofrequenzplatte (hier Sender 41) vorgesehen ist und die kurze Seite 53 der Stifte mit der anderen Leiterplatte, hier der Interconnection-Leiterplatte 37 verlötet (64) ist. Diese Stifte sind durch eine gemeinsame Isolierleiste 54 gehalten. Dahinter führen die Stifte durch hütchenförmige Durchführungskondensatoren 56, deren schlanker Teil jeweils durch ein für die Steckstiftreihe gemeinsames Massefederblech 57 hindurchgesteckt und verlötet ist. Das Massefederblech 57 hat auf der Längsseite Federpratzen 55 nach Art einer Fiederung. Diese Fiederung legt sich beim Einlegen der Verdrahtungsplatte 37 in das Gehäuse auf eine Ausfräsung 58 in der Scheidewand, so daß ein guter Massekontakt des Federblechs 57 erreicht wird. Die Gegensteckerbuchse auf der Radiofrequenzseite befindet sich, in Steckrichtung gesehen, hinter dieser, so daß die langen Stifte 52 zunächst durch die Schaltungsplatte gesteckt werden und dann in die Buchsen eingleiten. Dies ergibt eine sehr gute und einfache Abschirmung der Zuführungsleitungen zur Radiofrequenzkammer. In der Figur 4 ist rechts unten noch ein Ausschnitt gezeigt, der diese langen Stifte 52 auf der Radiofrequenzseite darstellt.

Einzelne Bauteile, hier zum Beispiel die VCO's sind durch zusätzliche Kammern in der Scheidewand abgeschirmt, wozu die Hochfrequenzdichtungen 59 dienen. Eine Zusatztrennwand 60 sorgt schließlich noch für die Abschirmung zwischen den stark strahlenden Teilen der Sendeendstufe und denen der übrigen Radiofrequenzbauelemente.

Auf diese Weise hat das Traggehäuse eine Gestaltung, die nicht nur verschiedene Variationen in der Anwendung zuläßt sondern auch einen einfachen und sicheren Innenaufbau.

## Ansprüche

1. Funksendeempfänger der elektrischen Nachrichtentechnik, der sich in einem Gehäuse mit Traggurt befindet und als transportables Funktelefon mit einer Bedieneinheit ausgebildet ist, **dadurch gekennzeichnet,** daß an einer länglichen Seitenwand eines rechteckigen Gehäuseblocks (1), der den eigentlichen Funksendeempfänger enthält, eine anschraubbare Auflage (2) mit Magnethalterung (4) für die hantelförmige, steckbare Hör-Sprechgarnitur (3), die auf der Rückseite die Bedientastatur (6) enthält, vorgesehen ist und auf der dem Traggurt (5) gegenüberliegenden Wand einen innenliegenden mehrpoligen Steckanschluß (36) für den wahlweisen Anschluß eines auf das Gehäuse aufschnappbaren Batterieblocks (15) oder einer anderweitigen Stromversorgung (16, 17) enthält, während die Steckanschlüsse für eine Antenne (34) und die Bediengarnitur (35) an der gegenüberliegenden Seitenwand liegen.

2. Funksendeempfänger nach Anspruch 1, **dadurch gekennzeichnet,** daß das Gehäuse (1) in Richtung seiner größten Fläche im Inneren eine Trennwand (30) hat, so daß zwei gegenseitig abgeschirmte Kammern entstehen und in der einen die wesentlichen radiofrequenten Baueinheiten (40, 41) wie Sender und Empfänger auf Leiterplatten enthalten sind und in der anderen Kammer im wesentlichen eine gemeinsame Verdrahtungsplatte (37) und die für die Bedienfunktionen wie Coder-Decoder für die Wahl und Modulationseinheiten (Logikplatte 39) vorgesehen sind, wobei die Leiterplatten mit erforderlichen Distanzen zur Scheidewand (30) jedoch durch diese hindurch über Steckereinheiten elektrisch verbunden sind.

3. Funksendeempfänger nach Anspruch 2, **dadurch gekennzeichnet,** daß die Steckereinheiten für die durch die Scheidewand getrennten Leiterplatten für die gemeinsame Verdrahtung (37) und die Radiofrequenzbauteile (40, 41) als Durchführungskondensatorstecker ausgebildet sind, deren eine, relativ kurze Steckerstifte (53) als Lötstifte in der einen Leiterplatte (37) befestigt sind, während die anderen, relativ lang ausgebildeten Enden der Steckerstifte (52) durch einen Durchbruch (48) in der Scheidewand (30) und welche in der gegenüberliegenden Leiterplatte (41) hindurch in eine rückseitige Buchsenleiste (65) auf dieser Leiterplatte eingreifen und daß um die auf einer Isolierleiste (54) befestigten Steckerstiftenden herum die einzelnen hütchenförmigen Durchführungskondensatoren (56) angeordnet sind, deren außenliegende Massebeschichtungen mit einem gemeinsamen, rechteckigen, gefiederten Massefederblech (57) verlötet sind, dessen Fiederung (55) auf bearbeiteten Flächen (58) der Scheidewand (30) aufliegt.

4. Funksendeempfänger nach Anspruch 3, **dadurch gekennzeichnet,** daß in der einen Kammer nächst der Scheidewand (30) die Verdrahtungsplatte (37) angeordnet ist, die über flexible Bandleitungen (62, 63) mit einerseits dem mehrpoligen Stecker (35) für die Bediengarnitur und andererseits der Stromversorgung (36) verbunden sind und daß mit Abstand zu dieser gemeinsamen Verdrahtungsplatte (37) die Platte für die Logik (39) befestigt ist, sowie parallel dazu im oberen Teil der Kammer ein Antennendiplexer (38), dessen Ausgänge über flexible Leitungen (42, 43) durch die Scheidewand (30) hindurch mit Senderausgang und Empfängereingang verbunden sind.

5. Funksendeempfänger nach einem der vorhergehenden Ansprüche, **dadurch gekennzeichnet,** daß für das durch Deckel (32, 33) abgeschlossene Gehäuse für den Betrieb im Fahrzeug oder einer Feststation eine nach oben und teilweise seitwärts offene Halterung (23) vorgesehen ist, die auf der ausgeschnittenen Seite im unteren Bereich einen Zusatzkühlblock (27) enthält, an den die Kühlfläche (47) des Senders unmittelbar zur Anlage kommt, während gleichzeitig durch automatische Umschaltung die Sendeleistung erhöhbar ist.

6. Funksendeempfänger nach einem der vorhergehenden Ansprüche, **dadurch gekennzeichnet,** daß an der der Bediengarnitur (3) gegenüber liegenden Seitenwand des Gehäuses ein Rippenkühlkörper (10) befestigt ist, der im direkten Wärmekontakt mit der Senderendstufe steht und daß auf diesen ein Zusatzkühlblock (9) mit entsprechender Gegenrippung, die in die Kühlrippen der Wand paßt, einsteckbar und damit verschraubbar ist.

FIG 1

# FIG 2

8

24

25

26

27

23

Zündung

oder

0 262 576

# FIG 3

0 262 576

FIG 4